# EUROPÄISCHE PATENTSCHRIFT

(11) **EP 1 228 328 B1**
(45) Veröffentlichungstag und Bekanntmachung des Hinweises auf die Patenterteilung: **04.01.2006**
(21) Anmeldenummer: 01974002.6
(22) Anmeldetag: 05.09.2001
(51) Int. Cl.: F16H 61/32, F16H 63/48

(54) **VORRICHTUNG ZUM UMSCHALTEN EINES MECHANISCHEN SCHALTMITTELS ZWISCHEN EINEM ERSTEN SCHALTZUSTAND UND WENIGSTENS EINEM ZWEITEN SCHALTZUSTAND**
DEVICE FOR SHIFTING A MECHANICAL SHIFTING ELEMENT BETWEEN A FIRST SHIFTING STATE AND AT LEAST A SECOND SHIFTING STATE
PROCEDE PERMETTANT LE PASSAGE D'UN SYSTEME DE COMMUTATION MECANIQUE ENTRE UN PREMIER ETAT DE COMMUTATION ET UN DEUXIEME ETAT DE COMMUTATION

(30) Priorität: 06.09.2000 DE 10044159
(43) Veröffentlichungstag der Anmeldung: 07.08.2002
(73) Patentinhaber: ZF Lemförder Metallwaren AG, 49441 Lemförde (DE)
(72) Erfinder: MEYER, Jörg, 49419 Wagenfeld (DE); GIEFER, Andreas, 49448 Lemförde (DE); RAKE, Ludger, 49356 Diepholz (DE); BÖRGERDING, Reimund, 49439 Steinfeld (DE)
(86) Internationale Anmeldenummer: PCT/DE2001/003385
(87) Internationale Veröffentlichungsnummer: WO 2002/021022

(56) Entgegenhaltungen:
- EP-A- 0 527 389
- EP-A- 0 757 193
- DE-A- 19 834 156
- US-A- 4 291 586
- PATENT ABSTRACTS OF JAPAN vol. 1996, no. 02, 29. Februar 1996 (1996-02-29) -& JP 07 277156 A (SANYO ELECTRIC CO LTD), 24. Oktober 1995 (1995-10-24)
- PATENT ABSTRACTS OF JAPAN vol. 011, no. 044 (M-560), 10. Februar 1987 (1987-02-10) -& JP 61 207258 A (NIPPON DENSO CO LTD), 13. September 1986 (1986-09-13)

## Beschreibung

Die Erfindung betrifft eine Vorrichtung zum Umschalten eines mechanischen Schaltmittels zwischen einem ersten Schaltzustand und wenigstens einem zweiten Schaltzustand, insbesondere zum Ein- und Ausschalten einer Parksperre für ein Automatikgetriebe.

Aus dem Stand der Technik sind Automatikgetriebe mit einer mechanischen Parksperre bekannt. Einem herkömmlichen Automatikgetriebe für Kraftfahrzeuge sind in der Regel wenigstens vier Betriebsarten zugeordnet, die zu folgenden Schaltstellungen eines Schalthebels korrespondieren, nämlich "P", "R", "N" und "D". Bei den einzelnen Schaltstellungen kennzeichnet "P" den Zustand "Parken", wobei üblicherweise in diesem Zustand das Getriebe durch die Parksperre mechanisch gegen ein Übertragen von Bewegungen gesperrt ist. "R" kennzeichnet den "Rückwärtsfahrbetrieb", "D" den "Vorwärtsfahrbetrieb und die Schaltstellung "N" entspricht dem "Neutralbetrieb", in dem keine mechanische Koppelung zwischen dem Motor und den Rädern vorhanden ist.

Eine übliche Sicherheitsanforderung ist, dass die mechanische Parksperre des Automatikgetriebes im Stillstand des Fahrzeuges stets eingelegt werden kann bzw. eingelegt ist.
Mit einer Automatikschaltung, bei der ein mechanisches Übertragungsglied, wie zum Beispiel ein Schaltzug oder ein Schaltgestänge, zwischen dem Schalthebel und dem Automatikgetriebe vorgesehen ist, ist diese Sicherheitsanforderung relativ einfach zu erfüllen, da wegen des mechanischen Übertragungsgliedes eine Koppelung zwischen dem tatsächlichen Schaltzustand des Getriebes und dem angezeigten Schaltzustand des Schalthebels erzwungen wird, jedenfalls solange das mechanische Übertragungsglied nicht defekt ist. Selbst bei einem Stromausfall im Fahrzeug kann der Schalthebel in die Schaltstellung "P" gebracht und über die mechanische Koppelung das Automatikgetriebe in den entsprechenden Zustand mit eingeschalteter Parksperre geschaltet werden.

In jüngster Zeit sind allerdings elektromechanische Übertragungsglieder für die Automatikschaltung entwickelt worden, wobei eine mechanische Koppelung zwischen dem Automatikgetriebe und dem Schalthebel nicht mehr vorgesehen ist. In diesem Fall werden die Schaltzustände des Schalthebels elektronisch erfasst und in Form von diesen zugeordneten elektrischen Signalen einer Vorrichtung (Getriebeaktuatorik) zugeführt, welche an Stelle des mechanischen Übertragungsgliedes das Automatikgetriebe in die der Schaltstellung des Schalthebels entsprechende Betriebsart stellt. Ein solcher elektromechanischer Schaltvorgang wird auch mit dem englischen Ausdruck "shift-by-wire" bezeichnet.

Bei der elektromechanischen Koppelung zwischen dem Schalthebel und dem Automatikgetriebe ist es allerdings möglich, dass bei einem Stromausfall im Fahrzeug für das Getriebe eine andere Betriebsart eingestellt ist, als vom Schalthebel angezeigt wird, da der Schalthebel mechanisch unabhängig von der Getriebeaktuatorik betätigt werden kann. Somit ist aber die oben angesprochene Sicherheitsanforderung nicht mehr in jedem Fall erfüllbar.

Die gattungsbildende JP 07 277156 A offenbart eine Vorrichtung zum Umschalten eines mechanischen Schaltmittels zwischen einem ersten und einem zweiten Schaltzustand. Mit dem als Trommelbremse ausgebildeten Schaltmittel, wobei der anliegende Bremsbelag einen ersten Schaltzustand und der gelöste Bremsbelag einen zweiten Schaltzustand definiert, ist ein Stellglied in der Ausbildung eines Bremshebels gekoppelt. An dem Stellglied ist einenends ein Hebel schwenkbar angelenkt. Dieser Hebel ist über eine elektromagnetische Kupplung mit einer Antriebseinrichtung gekoppelt. Anderenends ist zwischen dem Hebel und einem Widerlager eine Zugfeder angeordnet, welche über dem Hebel das Stellglied bei getrennter Kupplung in eine den ersten Schaltzustand definierende Stellung des Schaltmittels überführt. Bei eingerasteter Kupplung hingegen wird das Schaltmittel mittels der Antriebseinrichtung und den daran über eine oszillierende Scheibe gekoppelten Hebel sowie das Stellglied in den zweiten Schaltzustand versetzt.

Da zwischen dem Stellglied und dem Hebel stets eine mechanische, nicht entkuppelbare Verbindung besteht und sich der Hebel in einer Totpunktstellung befinden kann, ist nicht sichergestellt, dass die Zugfeder das Schaltmittel stets in den ersten Schaltzustand überführt, bei dem eine Bewegung des an das Schaltmittel angebunden Getriebes verhindert wird. Zudem baut die Vorrichtung sehr groß auf und besteht aus vielen Bauteilen, womit die Vorrichtung auch kostenintensiv wird.

Der Erfindung liegt die Aufgabe zugrunde, eine Vorrichtung zu schaffen, mit der die oben angesprochene Sicherheitsanforderung für ein Automatikgetriebe auch bei Verwendung eines elektromechanischen Übertragungsgliedes erfüllbar ist. Zur Lösung dieser Aufgabe wird erfindungsgemäß eine Vorrichtung mit den Merkmalen nach dem Patentanspruch 1 geschaffen. Bevorzugte Weiterbildungen sind in den Unteransprüchen beansprucht.

Die erfindungsgemäße Vorrichtung zum Umschalten eines mechanischen Schaltmittels zwischen einem ersten Schaltzustand und wenigstens einem zweiten Schaltzustand weist ein mit dem Schaltmittel gekoppeltes Stellglied zum Umschalten zwischen den Schaltzuständen auf, wobei das Stellglied über eine Kuppelvorrichtung mit einem Steuerglied gekuppelt werden kann.

Jedem Schaltzustand des Schaltmittels ist eine bestimmte Position des Stellgliedes zugeordnet, so dass das Schaltmittel in einen beliebigen Schaltzustand von dem ersten und dem wenigstens zweiten Schaltzustand geschaltet werden kann, indem das Stellglied in die dem beliebigen Schaltzustand zugeordnete Position gebracht wird. Eine Positionsänderung des Stellgliedes kann zum Beispiel durch ein Verschieben, ein Verdrehen oder ein Verschwenken herbeigeführt werden.

Im gekuppelten Zustand kann das Stellglied von dem Steuerglied angetrieben bzw. betätigt werden, wobei das Steuerglied selbst von einer Antriebsvorrichtung betätigt bzw. angetrieben wird. Durch das Antreiben des Steuergliedes kann somit das Stellglied in die unterschiedlichen, den Schaltzuständen zugeordneten Positionen gebracht werden. Dafür ist jeder dieser Positionen des Stellgliedes wiederum eine bestimmte Position des Steuergliedes zugeordnet, in welche dieses mittels der Antriebseinrichtung gebracht werden kann.

Die Kuppelvorrichtung kann über ein elektrisches Signal betätigt werden, was heißt, dass das Stellglied mit dem Steuerglied von dieser gekuppelt wird, wenn das elektrische Signal einen bestimmten Zustand annimmt. Es kann sich dabei um einen nahezu beliebigen Zustand handeln, sofern sichergestellt ist, dass sich dieser von dem Signalzustand bei einem Ausfall des elektrischen Signals unterscheidet, wobei unter Ausfall des elektrischen Signals zum Beispiel ein Stromausfall zu verstehen ist. Im Falle des Ausfalls des elektrischen Signals wird dann die Kuppelung zwischen dem Stellglied und dem Steuerglied von der Kuppelvorrichtung freigegeben, so dass diese beiden Glieder wieder voneinander entkuppelt sind.

Für eine sichere Rückstellung des Schaltmittels in den ersten Schaltzustand bei Ausfall des elektrischen Signals ist mit dem Stellglied und einem Widerlager ein Federmittel gekoppelt, welches in jedem von dem ersten Schaltzustand verschiedenen Schaltzustand hinsichtlich des Stellgliedes derart gespannt ist, dass im Falle einer Entkuppelung zwischen dem Stellglied und dem Steuerglied, das Stellglied von dem Federmittel unter Verringerung der Spannung desselben in die dem ersten Schaltzustand zugeordnete Position geschaltet wird, wodurch auch das Schaltmittel in den ersten Schaltzustand geschaltet wird. Da das Federmittel mit dem Stellglied und dem Widerlager gekoppelt ist, kann die für die Rückstellung des Stellgliedes in die dem ersten Schaltzustand zugeordnete Position erforderliche Spannung des Federmittels durch eine relative Positionsänderung zwischen bzw. durch eine Relativbewegung von dem Stellglied und dem Widerlager aufgebaut werden.

Die erfindungsgemäße Vorrichtung kann überall dort eingesetzt werden, wo bei einem Stromausfall ein bestimmter von wenigstens zwei Schaltzuständen eines mechanischen Schaltmittels sicher eingeschaltet werden soll. Bevorzugt wird die erfindungsgemäße Vorrichtung allerdings für das Ein- bzw. Ausschalten einer Parksperre eines Automatikgetriebes verwendet. Dabei ist das Schaltmittel als Parksperre des Automatikgetriebes ausgebildet, wobei der erste Schaltzustand dem Zustand der eingeschalteten Parksperre und der wenigstens zweite Schaltzustand dem Zustand der ausgeschalteten Parksperre entspricht.

Erfindungsgemäß ist das Stellglied aber über eine Welle mit dem Schaltmittel gekoppelt, wobei das Schaltmittel über eine Drehbewegung der Welle zwischen dem ersten und dem wenigstens zweiten Schaltzustand umgeschaltet wird. Dabei ist das Stellglied drehfest mit der Welle verbunden.

Das Steuerglied kann im gekuppelten Zustand eine translatorische Bewegung übertragen, welche am Stellglied in eine Drehbewegung zum Umschalten zwischen den unterschiedlichen Zuständen umgewandelt werden kann. Das Steuerglied ist dabei hinsichtlich der Welle drehbar gelagert, wobei das Stellglied und das Steuerglied im gekuppelten Zustand drehfest miteinander verbunden sind. Somit kann durch eine Drehbewegung des Steuergliedes im gekuppelten Zustand über das Stellglied die Welle zum Umschalten des Schaltmittels zwischen den Schaltzuständen gedreht werden.

Der gekuppelte Zustand von dem Stellglied und dem Steuerglied kann mittels eines allgemeinen Form- oder Kraftschlusses realisiert werden. Zum Beispiel kann der gekuppelte Zustand nach dem Prinzip einer Reibkupplung verwirklicht werden, wobei das Stellglied, das Steuerglied und die Kuppelvorrichtung entsprechend dem Aufbau einer solchen Reibkupplung ausgelegt sind. Erfindungsgemäß sind jedoch das Stellglied und das Steuerglied derart ausgebildet, dass von diesen beiden Gliedern eine Zahnhaltebremse (Zahnkupplung) gebildet ist.

Zum Bilden einer Zahnkupplung sind sowohl das Stellglied als auch das Steuerglied als Scheiben ausgebildet, deren einander gegenüberliegende Flächen jeweils mit mehreren Zähnen versehen sind. Im gekuppelten Zustand werden das Stellglied und das Steuerglied über eine von der Kuppelvorrichtung ausgeübte Kuppelkraft aneinander gehalten, wobei die Zähne des Steuergliedes in die Zwischenräume zwischen den Zähnen des Stellgliedes eingreifen und umgekehrt. Dabei stehen die Zähne der Stellglieds in Wirkverbindung mit den Zähnen des Steuerglieds, wodurch eine drehfeste Verbindung zwischen dem Steuerglied und dem Stellglied ausgebildet wird, so lange die Kuppelkraft von der Kuppelvorrichtung aufrecht erhalten wird. Ferner ist die geometrische Ausgestaltung der Zähne derart beschaffen, dass bei Übertragung eines Drehmomentes von dem Stellglied auf das Steuerglied oder umgekehrt eine Lösekraft auf die beiden Glieder wirkt, welche das Steuerglied und das Stellglied auseinanderdrückt. Soll der gekuppelte Zustand zwischen dem Stellglied und dem Steuerglied aufrechterhalten werden, muss daher der Betrag der Kuppelkraft immer größer als der oder wenigstens gleich dem Betrag der Löskraft sein. Bei einem Wegfall der Kuppelkraft und einer gleichzeitigen Übertragung eines Drehmomentes von dem Stellglied auf das Steuerglied oder umgekehrt werden das Steuerglied und das Stellglied relativ auseinanderbewegt, bis die Zähne nicht mehr in die Zwischenräume eingreifen. Somit hat die Zahnkupplung den Vorteil, dass die drehfeste Verbindung zwischen dem Stellglied und dem Steuerglied automatisch freigegeben wird, wenn die beiden Glieder nicht mehr über die Kuppelkraft aneinander gehalten werden. Bevorzugt ist die Zahnkupplung derart ausgelegt, dass aufgrund der Lösekraft das Steuerglied von dem Stellglied wegbewegt wird.

Das Federmittel kann von einer beliebigen mechanischen Feder gebildet sein, die geeignet ist, das in dem wenigstens zweiten Schaltzustand befindliche Schaltmittel im entkuppelten Zustand in den ersten Schaltzustand zurückzustellen. Bevorzugt handelt es sich bei dem Federmittel aber um eine an dem Stellglied und an dem Widerlager befestigte Spiralfeder, Schenkelfeder oder schraubenförmig gewundene Biegefeder, wobei die Rückstellung des Schaltmittels in den ersten Schaltzustand über die drehfeste Verbindung zwischen dem Stellglied und der Welle erfolgt.

Um eine sichere Rückstellung des Schaltmittels in den ersten Schaltzustand zu gewährleisten, muss das Federmittel im zweiten Schaltzustand eine bestimmte Rückstellspannung aufweisen. Dazu kann es erforderlich sein, bereits im ersten Schaltzustand beim Federmittel eine bestimmte Mindestvorspannung vorzusehen.

Das Federmittel ist mit dem Stellglied und mit dem Widerlager gekoppelt, wobei nach einer ersten Alternative das Widerlager am Automatikgetriebe oder an einem relativ zum Automatikgetriebe festen Ort vorgesehen ist. Wird das Stellglied zum Einschalten des zweiten Schaltzustandes zum Beispiel durch eine Drehbewegung in die dem zweiten Schaltzustand zugeordnete Position gebracht, so wird gleichzeitig das Federmittel bis zur Rückstellspannung gespannt.

Die Anordnung des Widerlagers nach der ersten Alternative hat allerdings zur Folge, dass beim Umschalten von dem ersten in den zweiten Schaltzustand jedesmal die Arbeit zum Spannen des Federmittels aufgebracht werden muss. Ferner wird die für das Umschalten zu leistende Arbeit immer größer, je weiter das Stellglied dafür bewegt bzw. gedreht werden muss. Dieser Effekt kann bei einigen Anwendungsarten für die erfindungsgemäße Vorrichtung unerwünscht sein.

Deshalb ist nach einer zweiten Alternative das Widerlager an dem Steuerglied vorgesehen. In diesem Fall wird im entkuppelten Zustand das Steuerglied gegenüber dem Stellglied bis zur Rückstellspannung vorgespannt. Erst dann werden das Stellglied und das Steuerglied über die Kuppelvorrichtung miteinander gekuppelt. Im gekuppelten Zustand muss daher beim Umschalten von dem ersten Schaltzustand in den wenigstens zweiten Schaltzustand keine Arbeit mehr zum Spannen des Federmittels geleistet werden, da es zu keiner Relativbewegung zwischen dem Stellglied und dem Steuerglied bzw. dem Widerlager kommt. Die Spannung des Federmittels ist im gekuppelten Zustand konstant auf die Rückstellspannung festgelegt, so dass die Spannung des Federmittels nach der zweiten Alternative in jedem Schaltzustand konstant ist. Damit im entkuppelten Zustand das Stellglied in die dem ersten Schaltzustand zugeordnete Position von dem Federmittel zurückgestellt werden kann, muss das Steuerglied während des Rückstellvorganges relativ zu dem Stellglied festgelegt sein, so dass sich das Federmittel nur über das Rückstellen des Stellgliedes entspannen bzw. seine Spannung verringern kann. Diese Festlegung des Steuergliedes kann zum Beispiel dadurch erfolgen, dass das Steuerglied von dem Antriebsmittel über ein Getriebe mit Selbsthemmung, wie ein Schneckengetriebe, angetrieben wird.

Die Kuppelvorrichtung hat die Aufgabe, das Steuerglied und das Stellglied miteinander zu kuppeln. Um diese Aufgabe zu erfüllen, kann zum Beispiel von der Kuppelvorrichtung das Steuerglied zum Ausbilden eines mechanischen Kontaktes auf das Stellglied zubewegt werden oder umgekehrt, wobei von der Kuppelvorrichtung eine Kuppelkraft ausgeübt wird, über welche das Stellglied und das Steuerglied aneinandergestellt und zusammengehalten werden. Ferner soll von der Kuppelvorrichtung die Kupplung zwischen dem Stellglied und dem Steuerglied unter bestimmten Voraussetzungen wieder freigegeben werden. Dies kann zum Beispiel dadurch realisiert werden, dass die Kuppelvorrichtung im entkuppelten Zustand keine Kuppelkraft mehr auf das Steuerglied bzw. auf das Stellglied ausübt. Die Kuppelvorrichtung kann derart ausgelegt sein, dass von dieser zum Einnehmen des entkuppelten Zustandes das Steuerglied von dem Stellglied wegbewegt wird oder umgekehrt.

Die Kuppelvorrichtung kann zum Beispiel pneumatisch, hydraulisch oder elektrostatisch ausgelegt sein. Bevorzugt ist die Kuppelvorrichtung aber magnetisch ausgelegt, wobei die Kuppelvorrichtung sowohl am Stellglied als auch am Steuerglied jeweils einen magnetisierbaren Bereich aufweist und wenigstens einer der magnetisierbaren Bereiche von einem durch das elektrische Signal aktivierbaren Elektromagnet gebildet ist.

Gemäß einer einfachen Ausgestaltung dieser bevorzugten magnetischen Kuppelvorrichtung ist am Stellglied der Elektromagnet und am Steuerglied der magnetisierbare Bereich aus ferromagnetischem Material vorgesehen. Wenn der Elektromagnet von einem das elektrische Signal bildenden elektrischen Strom durchflossen wird, wirkt das von dem Elektromagneten erzeugte magnetische Feld derart mit dem ferromagnetischen Bereich am Steuerglied zusammen, dass das Steuerglied von dem Elektromagneten angezogen wird. Die durch den aktivierten Elektromagneten im Zusammenwirken mit dem ferromagnteischen Bereich hervorgerufene Anziehungskraft bewirkt als Kuppelkraft, dass das Steuerglied und das Stellglied aneinander gestellt und fest zusammen gehalten werden. Fällt der elektrische Strom aus irgendwelchen Gründen aus, so bricht auch das magnetische Feld des Elektromagneten zusammen, und es wird keine Kuppelkraft mehr ausgeübt, um das Stellglied und das Steuerglied zusammenzuhalten.

Selbstverständlich ist es auch möglich, den Elektromagnet am Steuerglied und den ferromagnetichen Bereich am Stellglied vorzusehen. Ferner kann der ferromagnetische Bereich auch durch einen zweiten Magneten, insbesondere einen zweiten Elektromagneten ersetzt werden.

Für den Fall, dass die erfindungsgemäße Vorrichtung in ein größeres, aus mehreren Komponenten bestehendes System mit einer Systemsteuerung eingebunden ist, ist ein Ausfall einzelner Komponenten des Systems möglich, ohne dass das elektrische Signal ausfällt. Dennoch kann es aus Sicherheitsgründen wichtig sein, dass das Schaltmittel in solchen Situationen in den ersten Schaltzustand geschaltet wird. Aus diesem Grund kann der Signalzustand bei einem Ausfall des elektrischen Signals auch gesteuert von der Systemsteuerung herbeigeführt werden, indem das elektrische Signal von dieser in den Zustand gebracht wird, den es bei seinem Ausfall annimmt.

Die Erfindung wird anhand bevorzugter Ausführungsformen unter Bezugnahme auf die Zeichnung beschrieben. In der Zeichnung zeigen:
Figur 1: Eine perspektivische Darstellung der erfindungsgemäßen Vorrichtung zum Umschalten eines mechanischen Schaltmittels nach einer ersten Ausführungsform im entkuppelten Zustand,
Figur 2: Eine Schnittansicht der Vorrichtung zum Umschalten eines mechanischen Schaltmittels nach Figur 1,
Figur 3: Eine perspektivische Darstellung der erfindungsgemäßen Vorrichtung zum Umschalten eines mechanischen Schaltmittels nach der ersten Ausführungsform im gekuppelten Zustand,
Figur 4: Eine perspektivische Darstellung der erfindungsgemäßen Vorrichtung zum Umschalten eines mechanischen Schaltmittels nach einer zweiten Ausführungsform im entkuppelten Zustand,
Figur 5: Eine Schnittansicht der Vorrichtung zum Umschalten eines mechanischen Schaltmittels nach Figur 4 und
Figur 6: Eine perspektivische Darstellung der erfindungsgemäßen Vorrichtung zum Umschalten eines mechanischen Schaltmittels nach der zweiten Ausführungsform im gekuppelten Zustand.

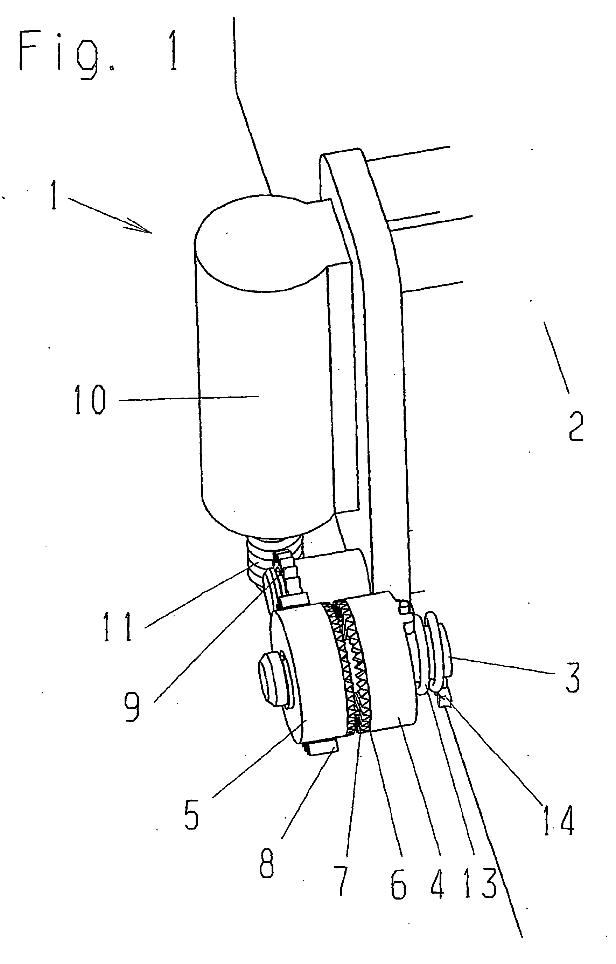

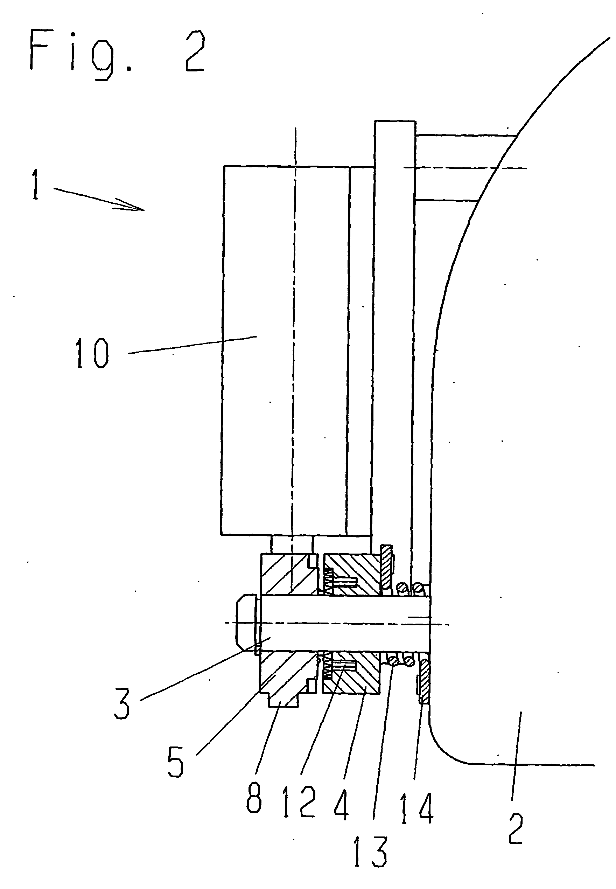

Aus den Figuren 1 bis 3 ist eine erste Ausführungsform der erfindungsgemäßen Vorrichtung zum Umschalten eines mechanischen Schaltmittels ersichtlich, welche insgesamt mit dem Bezugszeichen 1 bezeichnet wird. Die Vorrichtung 1 zum Umschalten eines mechanischen Schaltmittels ist an einem Automatikgetriebe 2 vorgesehen und dient wenigstens zum Umschalten zwischen den vier Betriebsarten "P", "R", "N" und "D". Zwischen den unterschiedlichen Betriebsarten des Automatikgetriebes kann über das Verdrehen einer Welle 3 umgeschaltet werden, wobei von einer der Betriebsart "P" zugeordneten Winkelstellung der Welle 3 aus, diese in einer als positiv definierten Drehrichtung gedreht werden kann, um die anderen Betriebsarten "R", "N" und "D" einzuschalten. Dabei entsprechen die Betriebsarten "R", "N" und "D" in dieser Reihenfolge einer zunehmenden Verdrehung der Welle 3 in der positiven Drehrichtung.

Ein als erste Zahnscheibe einer Zahnkupplung ausgebildetes Stellglied 4 ist konzentrisch zu und drehfest an der Welle 3 angeordnet. Ein als zweite Zahnscheibe der Zahnkupplung ausgebildetes Steuerglied 5 ist ebenfalls konzentrisch zu aber mit einem Spielsitz an der Welle 3 gelagert, wobei an den einander zugewandten Flächen der beiden Zahnscheiben jeweils ein zu der Welle konzentrischer Zahnkranz 6, 7 vorgesehen ist. Die Zähne des an dem Stellglied 4 angeordneten Zahnkranzes 6 stehen von dem Stellglied 4 in Richtung auf das Steuerglied 5 ab. Ferner stehen die Zähne des an dem Steuerglied 5 angeordneten Zahnkranzes 7 von dem Steuerglied 5 in Richtung auf das Stellglied 4 ab. Die Zahnkränze 6 und 7 haben den gleichen Durchmesser und sind derart ausgebildet, dass die Zähne des an dem Stellglied 4 angeordneten Zahnkranzes 6 in die Zwischenräume zwischen den Zähnen des an dem Steuerglied 5 angeordneten Zahnkranzes 7 eingreifen können und umgekehrt, wenn das Steuerglied 5 mit dem Stellglied 4 in Kontakt gebracht wird.

Die geometrische Ausgestaltung der einzelnen Zähne der beiden Zahnkränze 6, 7 ist derart, dass durch die Übertragung eines Drehmomentes von dem Steuerglied 5 auf das Stellglied 4 oder umgekehrt eine Lösekraft hervorgerufen wird, welche an dem Steuerglied 5 angreift und dieses von dem Stellglied 4 wegdrückt. Wird der Lösekraft nicht eine Kuppelkraft entgegengesetzt, die das Steuerglied 5 auf das Stellglied 4 zudrückt, so wird bei ausreichend hoher Lösekraft das Steuerglied 5 von dem Stellglied 4 bis zu einer Position wegbewegt, in der die Zähne der beiden Zahnkränze 6, 7 nicht mehr ineinandergreifen. Ohne Kuppelkraft ist also keine drehfeste Verbindung zwischen dem Stellglied 4 und dem Steuerglied 5 vorhanden, wodurch der entkuppelte Zustand gekennzeichnet ist. Dies gilt auch, wenn zwar die Kuppelkraft vorhanden, aber vom Betrag her kleiner als die Lösekraft ist.

Ist hingegen der Betrag der Kuppelkraft größer als der Betrag der Lösekraft, stehen das Stellglied 4 und das Steuerglied 5 miteinander in Kontakt. Die beiden Zahnkränze 6, 7 greifen ineinander und bilden eine drehfeste Verbindung zwischen dem Stellglied 4 und dem Steuerglied 5 aus, wodurch der gekuppelte Zustand gekennzeichnet ist.

Das Steuerglied 5 weist an seinem Umfang eine Zahnreihe 8 mit radial ausgerichteten Zähnen auf, die einen Teil eines Kreisbogens bildet. In diese Zahnreihe 8 greift ein Zahnrad 9 ein, in welches eine über einen Motor 10 angetriebene Zylinderschnecke 11 eingreift. Die Zylinderschnecke 11 und das Zahnrad 9 bilden ein Schneckengetriebe mit Selbsthemmung, über welches das Steuerglied 5 von dem Motor 10 angetrieben bzw. gedreht werden kann. Der Motor 10, die Zylinderschnecke 11 und das Zahnrad 9 bilden in Zusammenwirkung mit der Zahnreihe 8 die Antriebsvorrichtung zum Antreiben des Steuergliedes 5.

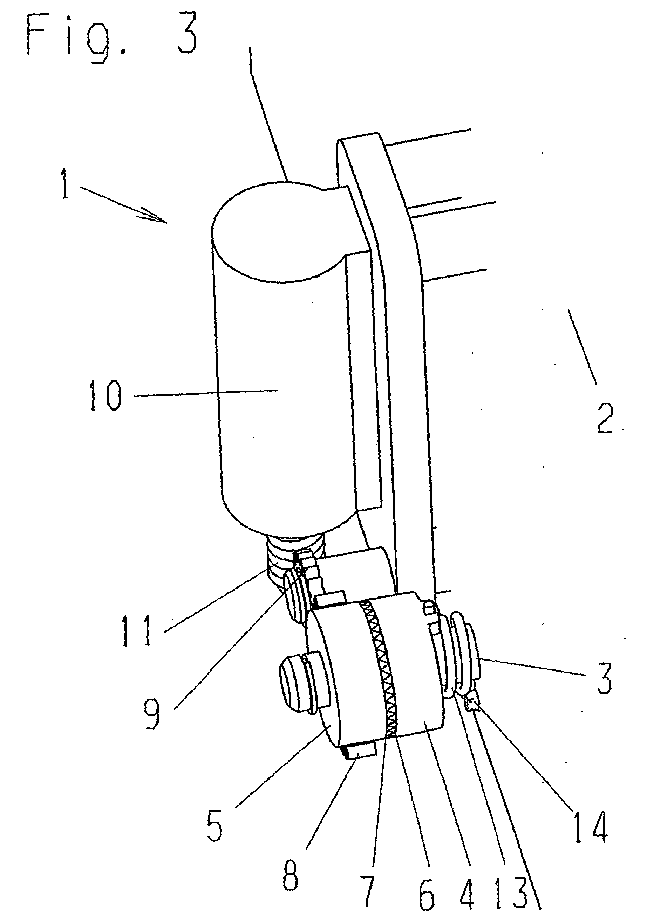

In dem Stellglied 4 ist ein Elektromagnet 12 vorgesehen, und das Steuerglied 5 ist aus ferromagnetischem Material hergestellt. Der Elektromagnet 12 und das ferromagnetische Material des Steuergliedes 5 bilden in Zusammenwirkung mit den Zahnkränzen 6, 7 eine Kuppelvorrichtung, mittels welcher das Stellglied 4 und das Steuerglied 5 miteinander gekuppelt werden können. Wird der Elektromagnet von einem elektrischen Strom durchflossen, so wird ein magnetisches Feld aufgebaut, welches das ferromagnetische Material magnetisiert und derart mit diesem zusammenwirkt, dass eine Kraft auf das ferromagnetische Material ausgeübt wird, welche als Kuppelkraft das Steuerglied 5 und das Stellglied 4 aneinanderstellt und fest zusammenhält. Wie aus Figur 3 ersichtlich, greifen dabei die beiden Zahnkränze 6, 7 ineinander, wodurch die drehfeste Verbindung zwischen dem Stellglied 4 und dem Steuerglied 5 ausgebildet wird. Das Stellglied 4 und das Steuerglied 5 befinden sich somit im gekuppelten Zustand, in welchem die von dem stromdurchflossenen Magneten in Zusammenwirkung mit dem ferromagnetischen Material hervorgerufene Kuppelkraft immer größer als die Lösekraft der Zahnkupplung ist.

Im gekuppelten Zustand kann die Welle 3 von dem Motor 10 gedreht werden, so dass mit Hilfe des Motors 10 zwischen den unterschiedlichen Betriebsarten des Automatikgetriebes 2 umgeschaltet werden kann. Der Motor 10 wird dabei von einem nicht dargestellten elektronischen Schaltkreis derart angesteuert, dass die im Automatikgetriebe 2 eingeschaltete Betriebsart zu der Schaltstellung des Schalthebels in der Fahrgastkabine des Kraftfahrzeuges korrespondiert. Dafür kann die Welle 3 vom Motor 10 entweder in die positive oder in die negative Drehrichtung gedreht werden.

An der dem Automatikgetriebe 2 zugewandten Fläche des Stellrades 4 ist eine Schenkelfeder 13 mit einem Ende befestigt, deren anderes Ende an einem an dem Automatikgetriebe 2 vorgesehenen Widerlager 14 befestigt ist.

Die Schenkelfeder 13 ist derart zwischen dem Stellglied 4 und dem Widerlager 14 befestigt, dass sie in der Betriebsart "P" ihre geringste Spannung aufweist, welche nachfolgend als Vorspannung bezeichnet wird. Zum Einschalten der Betriebsarten "R", "N" und "D" wird die Welle 3 über das Stellglied 4 in positiver Drehrichtung gedreht, wobei die Schenkelfeder 13 über die Vorspannung hinaus zusätzlich gespannt wird. Die Arbeit zum zusätzlichen Spannen der Schenkelfeder wird dabei im gekuppelten Zustand vom Motor 10 aufgebracht.

Kommt es nun in dem Fahrzeug zu einem Stromausfall, so bricht auch die Stromversorgung für den Elektromagneten 12 zusammen, und es wirkt keine Kuppelkraft mehr auf das Steuerglied 5. Ist das Automatikgetriebe 2 in einer anderen Betriebsart als der Betriebsart "P", so bewirkt das von der gespannten Schenkelfeder auf das Stellglied 4 übertragene Drehmoment, dass das Steuerglied 5 aufgrund der Lösekraft von dem Stellglied wegbewegt wird. Danach wird das Stellglied 4 von der Schenkelfeder 13 aufgrund Ihrer Spannung in die der Betriebsart "P" zugeordnete Winkelposition zurückgedreht, wodurch gleichzeitig das Automatikgetriebe 2 über die Welle 3 in die Betriebsart "P" zurückgeschaltet wird, in welcher die Parksperre eingeschaltet ist.

Damit das Stellglied 4 von der Schenkelfeder 13 auch zurückgedreht werden kann, ist eine bestimmte Mindestspannung der Schenkelfeder 13 erforderlich, die als Rückstellspannung bezeichnet wird. Die Schenkelfeder 13 weist in jeder von "P" verschiedenen Betriebsart mindestens diese Rückstellspannung auf, um ein Einschalten der Parksperre des Automatikgetriebes 2 bei einem Stromausfall sicher gewährleisten zu können. Aus diesem Grund kann es erforderlich sein, die Schenkelfeder 13 bereits in der der Betriebsart "P" zugeordneten Winkelposition des Stellgliedes 4 mit einer bestimmten Mindestvorspannung zu beaufschlagen. Damit die Mindestvorspannung nicht abgebaut wird, wenn sich die Zahnkupplung im entkuppelten Zustand befindet, ist zum Beispiel ein Anschlag am Automatikgetriebe 2 und ein Stift am Stellglied 4 vorgesehen, welcher in der der Betriebsart "P" zugeordneten Winkelposition des Stellgliedes 4 an dem Anschlag anliegt. Der Stift und der Anschlag wirken dabei derart zusammen, dass das Stellglied 4 in der der Betriebsart "P" zugeordneten Winkelposition nicht weiter in die negative Drehrichtung gedreht werden kann. Damit ist ein Abbau der Mindestvorspannung sicher verhindert.

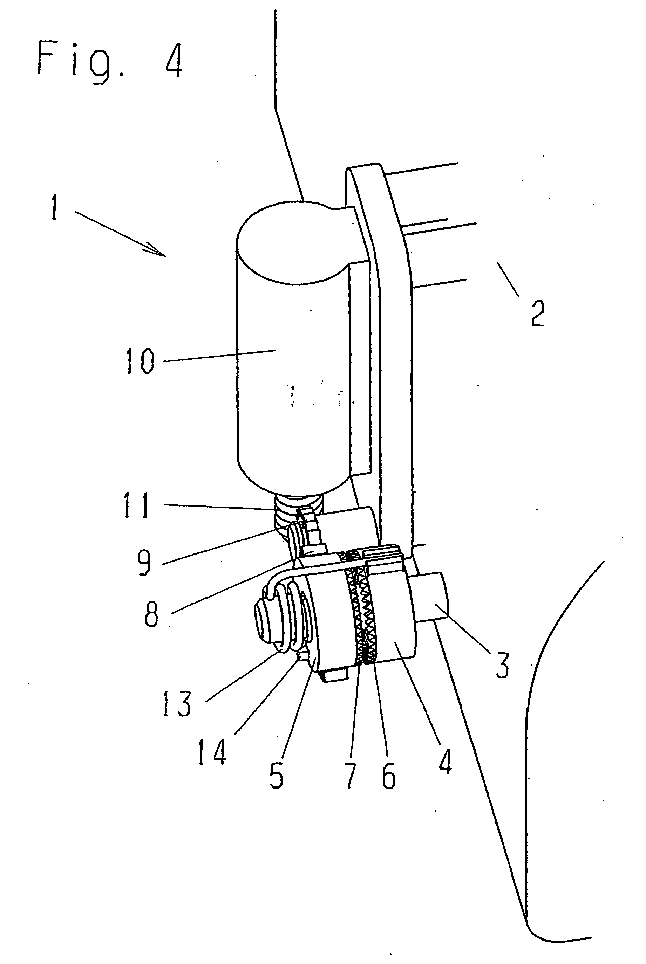

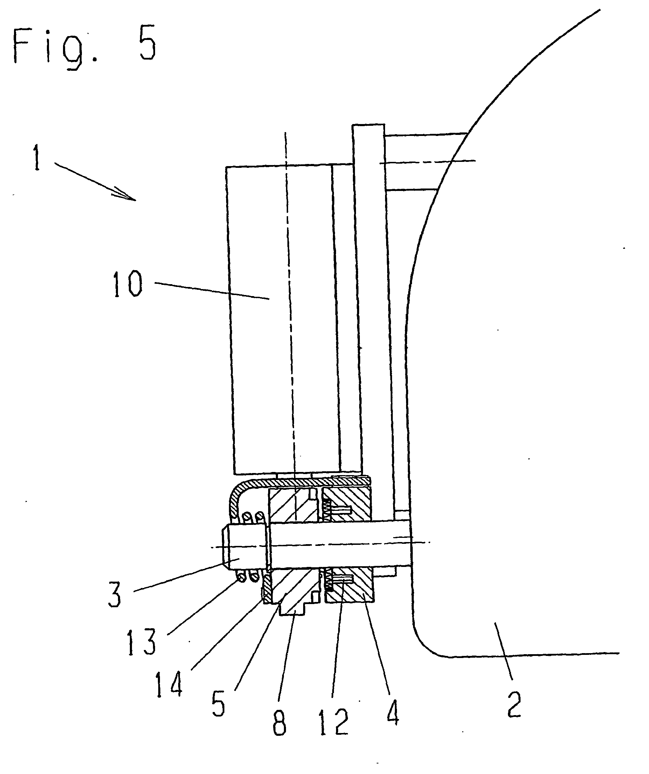

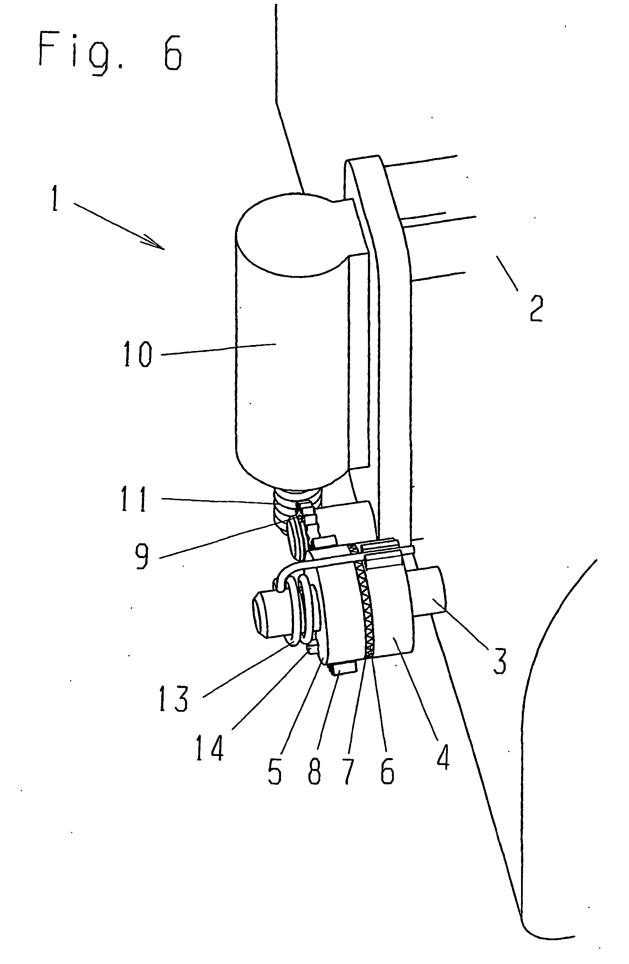

Aus den Figuren 4 bis 6 ist eine zweite Ausführungsform der erfindungsgemäßen Vorrichtung zum Umschalten eines mechanischen Schaltmittels ersichtlich, wobei die für die Merkmale nach der zweiten Ausführungsform verwendeten Bezugszeichen mit den für dieselben oder ähnliche Merkmale verwendeten Bezugszeichen nach der ersten Ausführungsform übereinstimmen.

Im wesentlichen stimmt die zweite Ausführungsform bis auf die Anordnung der Schenkelfeder 13 und des Widerlagers 14 in baulicher Hinsicht mit der ersten Ausführungsform überein. Allerdings können nach der zweiten Ausführungsform der Anschlag am Automatikgetriebe 2 und der Stift am Stellglied 4 entfallen.

Wie aus den Figuren 4 bis 6 ersichtlich, ist nach der zweiten Ausführungsform die Schenkelfeder 13 zwischen dem Stellglied 4 und dem Steuerglied 5 angeordnet. Dabei ist das Widerlager 14 an dem Steuerglied 5 vorgesehen, so dass die Schenkelfeder 13 mit ihrem einen Ende an dem Stellglied 4 und mit ihrem anderen Ende an dem an dem Steuerglied 5 vorgesehenen Widerlager 14 befestigt ist.

Die Schenkelfeder 13 ist derart zwischen dem Stellglied 4 und dem Widerlager 14 befestigt, dass sie im entkuppelten Zustand ihre geringste Spannung aufweist. Zum Umschalten zwischen den Betriebsarten, muss zunächst der gekuppelte Zustand zwischen dem Stellglied 4 und dem Steuerglied 5 hergestellt werden, was bevorzugt in der Schaltstellung "P" des Automatikgetriebes 2 erfolgt. Das Steuerrad 5 wird dafür von dem Motor 10 in der positiven Drehrichtung so lange gedreht, bis die Spannung der Schenkelfeder 13 der Rückstellspannung entspricht, wobei unter Rückstellspannung in diesem Fall die Spannung zu verstehen ist, die erforderlich, um das Automatikgetriebe 2 aus jeder von "P" verschiedenen Betriebsart heraus in die Betriebsart "P" zurückschalten zu können. Erst wenn die Spannung der Schenkelfeder 13 die Rückstellspannung erreicht hat, werden das Stellglied 4 und das Steuerglied 5 über den Elektromagneten 12 miteinander gekuppelt. Um ein mögliches Verdrehen der Welle 3 beim Spannen der Schenkelfeder 13 zu vermeiden, kann das Stellglied 4 während des Spannvorganges über eine Mechanik gegen ein Verdrehen gesichert sein, von der das Stellglied 4 nach dem Spannvorgang wieder freigegeben wird. Zum Einschalten der Betriebsarten "R", "N" und "D" aus der Betriebsart "P" heraus wird die Welle 3 dann von dem Motor 10 über die gekuppelte Zahnkupplung in positiver Drehrichtung gedreht, wobei die Spannung der Schenkelfeder 13 für alle Betriebsarten des Automatikgetriebes 2 konstant auf die Rückstellspannung festgelegt ist, solange der gekuppelte Zustand aufrechterhalten bleibt.

Nach der zweiten Ausführungsform muss also im Gegensatz zur ersten Ausführungsform im gekuppelten Zustand für das Umschalten zwischen den Betriebsarten des Automatikgetriebes 2 vom Motor 10 keine zusätzliche Arbeit zum Spannen der Schenkelfeder 13 aufgebracht werden.

Kommt es nun in dem Fahrzeug zu einem Stromausfall, so bricht auch die Stromversorgung für den Elektromagneten 12 zusammen, und auf das Steuerglied 5 wirkt keine Kuppelkraft mehr. Das von der bis zur Rückstellspannung gespannten Schenkelfeder 13 auf das Stellglied 4 übertragene Drehmoment bewirkt, dass das Steuerglied 5 aufgrund der Lösekraft von dem Stellglied wegbewegt wird. Anschließend wird das Stellglied 4 von der Schenkelfeder 13 aufgrund Ihrer Spannung in die der Betriebsart "P" zugeordnete Winkelposition zurückgedreht, wodurch gleichzeitig das Automatikgetriebe 2 über die Welle 3 in die Betriebsart "P" zurückgeschaltet wird, in welcher die Parksperre eingeschaltet ist.

Damit das Stellglied 4 auch von der Schenkelfeder 13 zurückgedreht werden kann, ist im entkuppelten Zustand eine Festlegung des Steuergliedes 5 hinsichtlich einer Drehbewegung relativ zu dem Stellglied 4 erforderlich. Diese bei der ersten Ausführungsform nicht erforderliche Festlegung erfolgt durch das von der Zylinderschnecke 11 und dem Zahnrad 9 gebildete Schneckengetriebe, welches eine ausreichend hohe Selbsthemmung aufweist, um ein Verdrehen des Steuergliedes 5 aufgrund der Federspannung der Schenkelfeder 13 zu verhindern.

### Bezugszeichenliste:

- 1: Schaltvorrichtung
- 2: Automatikgetriebe
- 3: Welle
- 4: Stellglied
- 5: Steuerglied
- 6: Zahnkranz am Stellglied
- 7: Zahnkranz am Steuerglied
- 8: Zahnreihe am Steuerglied
- 9: Zahnrad
- 10: Motor
- 11: Zylinderschnecke
- 12: Elektromagnet
- 13: Schenkelfeder
- 14: Widerlager

## Patentansprüche

1. Vorrichtung (1) zum Umschalten eines mechanischen Schaltmittels zwischen einem ersten Schaltzustand und wenigstens einem zweiten Schaltzustand, insbesondere zum Ein- bzw. Ausschalten einer Parksperre für ein Automatikgetriebe (2), mit
- einem mit dem Schaltmittel gekoppelten Stellglied (4) zum Umschalten zwischen den Schaltzuständen,
- einem mit dem Stellglied (4) kuppelbaren Steuerglied (5),
- einer über ein elektrisches Signal betätigbaren Kuppelvorrichtung (5, 6, 7, 12), mittels welcher das Stellglied (4) und das Steuerglied (5) miteinander kuppelbar sind und welche derart ausgelegt ist, dass im Falle des Ausfalls des elektrischen Signals das Stellglied (4) und das Steuerglied (5) voneinander entkuppelt sind,
- einer mit dem Steuerglied (5) gekoppelten Antriebseinrichtung (8, 9, 10, 11) zum Antreiben des Steuergliedes (5) und
- einem zum Schalten des Schaltmittels in den ersten Schaltzustand vorgesehenen Federmittel (13), welches mit dem Stellglied (4) und einem Widerlager (14) gekoppelt und im zweiten Schaltzustand hinsichtlich des Stellgliedes (4) derart gespannt ist, dass im entkuppelten Zustand das Schaltmittel über das Stellglied (4) von dem Federmittel (13) in den ersten Schaltzustand geschaltet wird,
**dadurch gekennzeichnet, dass**
- das Stellglied (4) und das Schaltmittel über eine Welle (3) miteinander gekoppelt sind, das Stellglied (4) drehfest mit der Welle verbunden ist und das Schaltmittel über eine Drehbewegung der Welle (3) zwischen dem ersten und dem zweiten Schaltzustand umgeschaltet wird und
- das Steuerglied (5) hinsichtlich der Welle (3) drehbar gelagert ist und das Stellglied (4) und das Steuerglied (5) im gekuppelten Zustand drehfest miteinander verbunden sind wobei das Stellglied (4) und das Steuerglied (5) mit jeweils einem Zahnkranz (6, 7) an den einander zugewandten Flächen eine Zahnkupplung ausbilden.

2. Vorrichtung nach Anspruch 1, wobei das Schaltmittel als Parksperre eines Automatikgetriebes ausgebildet ist, der erste Schaltzustand dem Zustand der eingeschalteten Parksperre entspricht und der zweite Schaltzustand dem Zustand der ausgeschalteten Parksperre entspricht.

3. Vorrichtung nach einem der Ansprüche 1 oder 2, wobei das Federmittel (13) als Spiralfeder, Schenkelfeder oder schraubenförmig gewundene Biegefeder ausgebildet und mit einem Ende an dem Stellglied (4) und mit dem anderen Ende an dem Widerlager (14) befestigt ist.

4. Vorrichtung nach einem der Ansprüche 2 bis 3, wobei das Widerlager (14) am Automatikgetriebe (2) oder an einem relativ zum Automatikgetriebe (2) festen Ort vorgesehen ist.

5. Vorrichtung nach einem der Ansprüche 1 bis 4, wobei das Widerlager (14) an dem Steuerglied (5) vorgesehen ist.

6. Vorrichtung nach einem der Ansprüche 1 bis 5, wobei die Kuppelvorrichtung (5, 6, 7, 12) sowohl am Stellglied (4) als auch am Steuerglied (5) jeweils einen magnetisierbaren Bereich aufweist und wenigstens einer der magnetisierbaren Bereiche von einem durch das elektrische Signal aktivierbaren Elektromagnet (12) gebildet ist.

7. Vorrichtung nach einem der Ansprüche 1 bis 6, wobei die Antriebseinrichtung (8, 9, 10, 11) einen Motor (10) aufweist, der über ein Schneckengetriebe (9, 11) mit dem Steuerglied (5) zum Drehen desselben gekoppelt ist.

8. Vorrichtung nach einem der Ansprüche 1 bis 7, wobei das elektrische Signal zum Annehmen des dem Ausfall des elektrischen Signals zugeordneten Signalzustands von einer Steuereinheit steuerbar ist.

## Claims

1. Device (1) for shifting a mechanical shifting means between a first shift state and at least a second shift state, in particular for engaging and/or disengaging a parking lock for an automatic transmission (2), having
- an actuator (4) coupled to the shifting means for shifting between the shift states,
- a control element (5) that may be coupled to the actuator (4),
- a coupling device (5, 6, 7, 12), which is actuable by an electrical signal and by means of which the actuator (4) and the control element (4) may be coupled to one another and which is designed in such a way that in the event of failure of the electrical signal the actuator (4) and the control element (5) are uncoupled from one another,
- a drive device (8, 9, 10, 11) coupled to the control element (5) for driving the control element (5) and
- a spring means (13), which is provided for shifting the shifting means to the first shift state and which is coupled to the actuator (4) and an abutment (14) and in the second shift state with regard to the actuator (4) is tensioned in such a way that in the uncoupled state the shifting means is shifted via the actuator (4) by the spring means (13) to the first shift state,
**characterized in that**
- the actuator (4) and the shifting means are coupled to one another by a shaft (3), the actuator (4) is connected in a rotationally fixed manner to the shaft and the shifting means is shifted between the first and the second shift state by means of a rotational movement of the shaft (3) and
- the control element (5) is supported rotatably with regard to the shaft (3), and the actuator (4) and the control element (5) in the coupled state are connected in a rotationally fixed manner to one another, wherein the actuator (4) and the control element (5) with in each case one ring gear (6, 7) on the mutually opposing faces form a toothed coupling.

2. Device according to claim 1, wherein the shifting means is designed as a parking lock of an automatic transmission, the first shift state corresponds to the state of the engaged parking lock and the second shift state corresponds to the state of the disengaged parking lock.

3. Device according to one of claims 1 or 2, wherein the spring means (13) is designed as a spiral spring, leg spring or helically coiled torsion spring and is fastened by one end to the actuator (4) and by the other end to the abutment (14).

4. Device according to one of claims 2 to 3, wherein the abutment (14) is provided on the automatic transmission (2) or at a location that is fixed relative to the automatic transmission (2).

5. Device according to one of claims 1 to 4, wherein the abutment (14) is provided on the control element (5).

6. Device according to one of claims 1 to 5, wherein the coupling device (5, 6, 7, 12) both on the actuator (4) and on the control element (5) comprises in each case a magnetizable region and at least one of the magnetizable regions is formed by an electromagnet (12), which may be activated by the electrical signal.

7. Device according to one of claims 1 to 6, wherein the drive device (8, 9, 10, 11) comprises a motor (10), which is coupled by a worm gear (9, 11) to the control element (5) for rotation thereof.

8. Device according to one of claims 1 to 7, wherein the electrical signal for adopting the signal state associated with failure of the electrical signal is controllable by a control unit.

## Revendications

1. Dispositif (1) pour faire passer un système de commutation mécanique d'un premier état de commutation à au moins un second état de commutation, notamment pour enclencher ou désenclencher un frein de stationnement pour une transmission automatique (2), et comprenant :
- un actionneur (4) couplé au système de commutation afin de passer d'un état de commutation à l'autre ;
- un élément de commande (5) pouvant se coupler à l'actionneur (4) ;
- un dispositif de couplage (5, 6, 7, 12) actionnable par un signal électrique, grâce auquel l'actionneur (4) et l'élément de commande (5) peuvent être couplés l'un à l'autre, et qui est conçu de sorte que, en cas de défaillance du signal électrique, l'actionneur (4) et l'élément de commande (5) sont découplés l'un de l'autre ;
- un dispositif d'entraînement (8, 9, 10, 11) couplé à l'élément d'entraînement (5) et permettant d'entraîner celui-ci ; et
- un moyen de type ressort (13) permettant de faire passer le système de commutation dans le premier état de commutation, lequel moyen de type ressort est couplé à l'actionneur (4) et à une butée (14) tandis que, dans le second état de commutation, il est tendu par rapport à l'actionneur (4) de sorte que, à l'état découplé, le moyen de type ressort (13) fait passer le système de commutation dans le premier état de commutation par le biais de l'actionneur (4) ;
**caractérisé en ce que** :
l'actionneur (4) et le système de commutation sont couplés l'un à l'autre par un arbre (3), l'actionneur (4) étant fixé à l'arbre de manière à ne pas tourner et le système de commutation pouvant être commuté entre le premier et le second état de commutation par un mouvement de rotation de l'arbre (3) ; et
- l'élément de commande (5) est monté rotatif par rapport à l'arbre (3), et l'actionneur (4) et l'élément de commande(5) sont connectés l'un à l'autre sans pouvoir tourner à l'état couplé, l'actionneur (4) et l'élément de commande (5) comportant chacun une couronne dentée (6, 7) sur les faces opposées et formant ainsi un couplage à dents.

2. Dispositif selon la revendication 1, dans lequel le système de commutation consiste en un frein de stationnement pour transmission automatique, le premier état de commutation correspondant à l'état d'enclenchement du frein de stationnement et le second état de commutation correspondant à l'état de désenclenchement du frein de stationnement.

3. Dispositif selon la revendication 1 ou 2, dans lequel le moyen de type ressort (13) consiste en un ressort hélicoïdal, en un ressort à branches ou en un ressort spirale enroulé sous forme d'hélice qui est fixé à l'actionneur (4) par une extrémité et à la butée (14) par l'autre extrémité.

4. Dispositif selon l'une des revendications 2 à 3, dans lequel la butée (14) est formée sur la transmission automatique (2) ou en un endroit fixe par rapport à la transmission automatique (2).

5. Dispositif selon l'une des revendications 1 à 4, dans lequel la butée (14) est formée sur l'élément de manoeuvre (5).

6. Dispositif selon l'une des revendications 1 à 5, dans lequel le dispositif de couplage (5, 6, 7, 12) comprend une zone magnétisable orientée vers l'actionneur (4) ainsi que vers l'élément de commande (5), et constituée par un électroaimant (12) actionnable par un signal électrique.

7. Dispositif selon l'une des revendications 1 à 6, dans lequel le dispositif d'entraînement (8, 9, 10, 11) comprend un moteur (10) qui est couplé à l'élément de commande (5) par une transmission à vis (9, 11) afin de faire tourner celui-ci.

8. Dispositif selon l'une des revendications 1 à 7, dans lequel le signal électrique est commandé par une unité de commande de manière à passer à un état de signal correspondant à une défaillance du signal électrique.
